# EUROPÄISCHE PATENTANMELDUNG

(11) **EP 2 230 359 A2**
(43) Veröffentlichungstag der Anmeldung: **22.09.2010**
(21) Anmeldenummer: 10162999.6
(22) Anmeldetag: 17.05.2010
(51) Int. Cl.: E03F 5/02, F16L 25/00, F16L 41/08

(54) **Bausatz für eine Verbindung eines Inspektions-Schachtes mit einer Abfluss-Leitung**

(30) Priorität: 16.03.2009 DE 102009013066
(71) Anmelder: Hegler, Ralph Peter, 97688 Bad Kissingen (DE)
(72) Erfinder: Hegler, Ralph Peter, 97688 Bad Kissingen (DE)
(74) Vertreter: Rau, Manfred

(57) **Zusammenfassung**

Ein Bausatz für eine Verbindung eines Inspektions-Schachtes (45) mit einer Abfluss-Leitung (40) weist einen Schacht-Grundkörper (1) aus Kunststoff auf, der durch Rotationsgießen einstückig ausgebildet ist und mit einem Schacht-Element (2) und zwei, als Spitzende ausgebildeten RohrAnschlüsse (3, 4) versehen ist. Weiterhin sind mindestens ein Rohr (14, 15) aus Kunststoff mit einer Muffe (13) aus Kunststoff zur Verbindung des mindestens einen Rohres (14, 15) mit einem Rohr-Anschluss (3, 4) und mindestens eine zwischen dem Rohr-Anschluss (3, 4) und der Muffe (13) anzuordnende Dichtung (36) vorgesehen.

## Beschreibung

Die Erfindung betrifft einen Bausatz für eine Verbindung eines Inspektions-Schachtes mit einer Abfluss-Leitung und einen Schacht-Grundkörper hierfür.

Unter Inspektions-Schacht wird in diesem Zusammenhang jede Form eines in eine Abfluss-Leitung integrierten bzw. zu integrierenden Schachtes verstanden, also ein Spül-Schacht, ein Inspektions-Schacht zum Kontrollieren und Spülen einer Abfluss-Leitung oder ein Revisions-Schacht, durch den eine Person einsteigen kann.

Schacht-Grundkörper für derartige Bausätze werden in der Praxis entweder durch Spritzgießen hergestellt, was wegen der hohen Aufwendungen für die Spritzgieß-Werkzeuge sehr kostenaufwändig ist. Alternativ werden derartige Grundkörper aus Einzelteilen zusammengebaut, wie es beispielsweise aus der EP 1 591 712 B1 oder der EP 0 913 534 B bekannt ist.

Der Erfindung liegt die Aufgabe zugrunde, einen Bausatz der allgemeinen Gattung zu schaffen, dessen Schacht-Grundkörper, insbesondere bei großen Abmessungen, kostengünstig herstellbar ist und im Bausatz einfach zu verlegen ist.

Diese Aufgabe wird erfindungsgemäß durch die Merkmale des Anspruches 1 gelöst. Die Herstellung des Schacht-Grundkörpers aus Kunststoff im Rotationsguss ist erheblich weniger aufwändig als die Herstellung im Spritzgieß-Verfahren, da die erforderlichen Werkzeuge sehr viel einfacher aufgebaut sind, und insbesondere keinen Kern benötigen. Der aus dem Rotationsgießverfahren resultierende Nachteil, dass die Kontur der Innenwand des Schacht-Grundkörpers nicht völlig eben ist und auch die Wanddicken nicht exakt definierbar sind, wird dadurch kompensiert, dass die Rohr-Anschlüsse als Spitzenden ausgebildet sind, wodurch ihre Außenmaße und Außenformen exakt festlegbar sind. Es kann also eine absolut dichte Verbindung mit dem Rohr oder den Rohren der Abfluss-Leitung hergestellt werden.

Die Ausgestaltung nach Anspruch 2 führt dazu, dass eine Dichtung zwischen Muffe und Rohr-Anschluss einen genau definierten Halt hat. Die Weiterbildung nach Anspruch 3 führt dazu, dass die Muffe einen festen, genau definierten und zentrierten Sitz auf dem als Spitzende ausgebildeten Rohr-Anschluss hat. Wenn der Schacht-Grundkörper und damit der gesamte Inspektions-Schacht in eine durchgehende Abfluss-Leitung, und zwar insbesondere eine Regenwasser-Abflussleitung, integriert ist, dann werden vor der Montage die bei der Herstellung verschlossenen Enden der Rohr-Anschlüsse aufgeschnitten. Wenn der Schacht am Ende einer Abfluss-Leitung angeordnet wird, dann wird entsprechend nur ein Rohr-Anschluss aufgeschnitten.

Die Ansprüche 6 bis 8 geben alternative Ausgestaltungen der dritten Wellung des Rohr-Anschlusses wieder, um einen Reibschluss zwischen dem Rohr-Anschluss und der Muffe zu erzeugen.

Die Ansprüche 7 und 8 geben Möglichkeiten der Ausgestaltung der Muffe wieder.

Der Anspruch 9 gibt eine vorteilhafte Ausgestaltung für den Fall wieder, dass der Durchmesser der an den Schacht-Grundkörper anzuschließenden Abwasser-Leitung kleiner ist als der Durchmesser der Rohr-Anschlüsse. Diese Ausgestaltung ist deshalb besonders vorteilhaft, weil der Schacht-Grundkörper für eine Standard-Nennweite der Abfluss-Leitung dimensioniert wird und dann für unterschiedliche Nennweiten eingesetzt werden kann.

Anspruch 10 gibt wieder, wie der Schacht-Grundkörper in einfacher Weise so ausgestaltet werden kann, dass Sicker-Leitungen angeschlossen werden können. Das hierüber zugeführte Sicker-Wasser wird dann über die als Regenwasser-Abflussleitung dienende Abfluss-Leitung abgeführt.

Da bei derartigen sogenannten Huckepack-Ausgestaltungen ein gewisser Abstand zwischen der Abfluss-Leitung und der Sicker-Leitung in der Praxis üblich ist, ist die Ausgestaltung nach Anspruch 11 von großem Vorteil, da sie ermöglicht, bei kleineren Nennweiten der Abfluss-Leitung die Sicker-Leitung auch unterhalb der Anschluss-Muffen an den Schacht-Grundkörper anzuschließen.

Anspruch 12 gibt schließlich die Ausgestaltung für den Schacht-Grundkörper wieder, wobei die Ansprüche 13 bis 15 seine vorteilhaften Weiterbildungen zum Inhalt haben.

Anspruch 16 gibt eine vorteilhafte Gesamt-Ausbildung des Schacht-Körpers wieder, wobei hervorzuheben ist, dass er allseitig aus Spitzenden besteht, so dass er an allen möglichen Anschlussbereichen enge Toleranzen aufweist und somit eine mediendichte Verbindung ermöglicht.

Weitere Einzelheiten, Merkmale und Vorteile der Erfindung ergeben sich aus der nachfolgenden Beschreibung von Ausführungsbeispielen anhand der Zeichnung. Es zeigt
- Fig. 1: einen Schacht-Grundkörper nach der Erfindung in einer ver- tikalen Seitenansicht entsprechend dem Sichtpfeil I in Fig. 2 in teilweise aufgebrochener Darstellung,
- Fig. 2: eine Seiten-Ansicht des Schacht-Grundkörpers entsprechend dem Sichtpfeil II in Fig. 1,
- Fig. 3: einen Inspektions-Schacht mit einem Schacht-Grundkörper nach der Erfindung und angeschlossenen Rohren und ange- schlossener Sicker-Leitung,
- Fig. 4: eine Einzelheit IV aus Fig. 3, die die Verbindung zwischen einem Rohr-Anschluss des Schacht-Grundkörpers und einem Rohr mittels einer Doppel-Steck-Muffe in gegenüber Fig. 3 stark vergrößerter Darstellung zeigt,
- Fig. 5: einen Teil-Querschnitt durch die Verbindung nach Fig. 4 ge- mäß der Schnittlinie V-V in Fig. 4,
- Fig. 6: eine Alternativausgestaltung zu Fig. 5 in einer Darstellung gemäß Fig. 5 und
- Fig. 7: eine Variante zu Fig. 3 in einer Darstellung entsprechend Fig. 3.

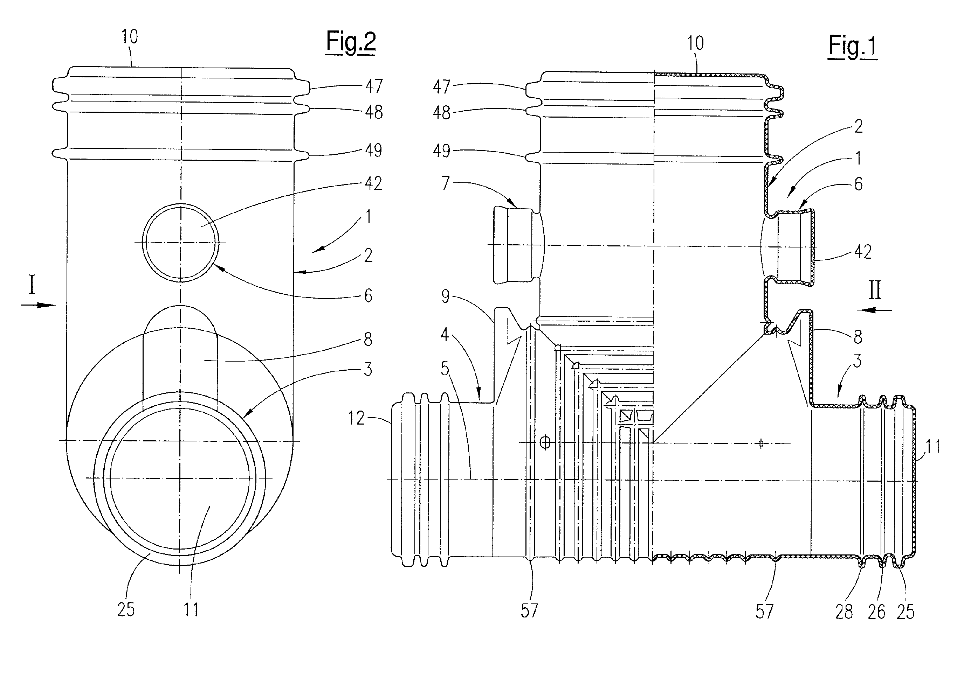

Der in den Fig. 1 und 2 dargestellte Inspektions-Schacht-Grundkörper 1 hat in grober Annäherung die Form eines auf dem Kopf stehenden T. Nach oben erstreckt sich ein Schacht-Element 2, das den Durchmesser eines Inspektions-Schachtes oder auch eines Revisions-Schachtes aufweist. Am unteren Ende erstrecken sich gleichsam als Quersteg des T zwei Rohr-Anschlüsse 3, 4, die eine durchgehende gemeinsame Achse 5 aufweisen. Diese Rohr-Anschlüsse 3, 4 sind als sogenannte Spitz-Enden ausgebildet und dienen zum Anschluss von Rohren, die eine durchgehende Rohrleitung bilden, die nach oben durch einen Inspektions- oder Revisions-Schacht zugänglich sind.

Am Schacht-Element 2 sind weiterhin mindestens zwei Anschluss-Muffen 6, 7 ausgebildet, an die - wie noch zu schildern sein wird - Sicker-Leitungen angeschlossen werden können. Die Rohr-Anschlüsse 3, 4 und die Anschluss-Muffen 6, 7 weisen Standard-Maße auf. Zwischen den Anschluss-Muffen 6, 7 und den Rohr-Anschlüssen 3, 4 sind ebene Anschluss-Flächen 8, 9 jeweils in Form eines nach unten offenen U ausgebildet. Auch hierauf wird weiter unten noch eingegangen. Der Schacht-Grundkörper 1 ist im Bereich zwischen den Rohr-Anschlüssen 3, 4 mit kleinen Verstärkungs-Wellungen 57 versehen.

Der Schacht-Grundkörper 1 wird im Rotations-Gießverfahren hergestellt. Dies führt dazu, dass der in den Fig. 1 und 2 dargestellte Schacht-Grundkörper nach der Herstellung rundum geschlossen ausgebildet ist. Die die Rohr-Anschlüsse 3, 4 und das obere Ende des Schacht-Elementes 2 abschließenden Bereiche 10, 11, 12 des Schacht-Grundkörpers 1 müssen also vor der Montage herausgeschnitten werden.

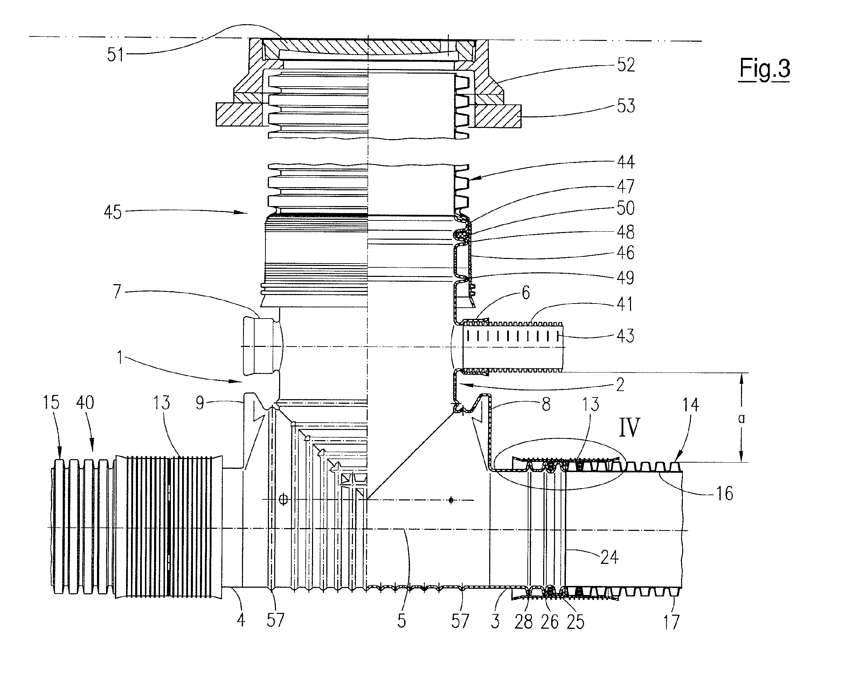

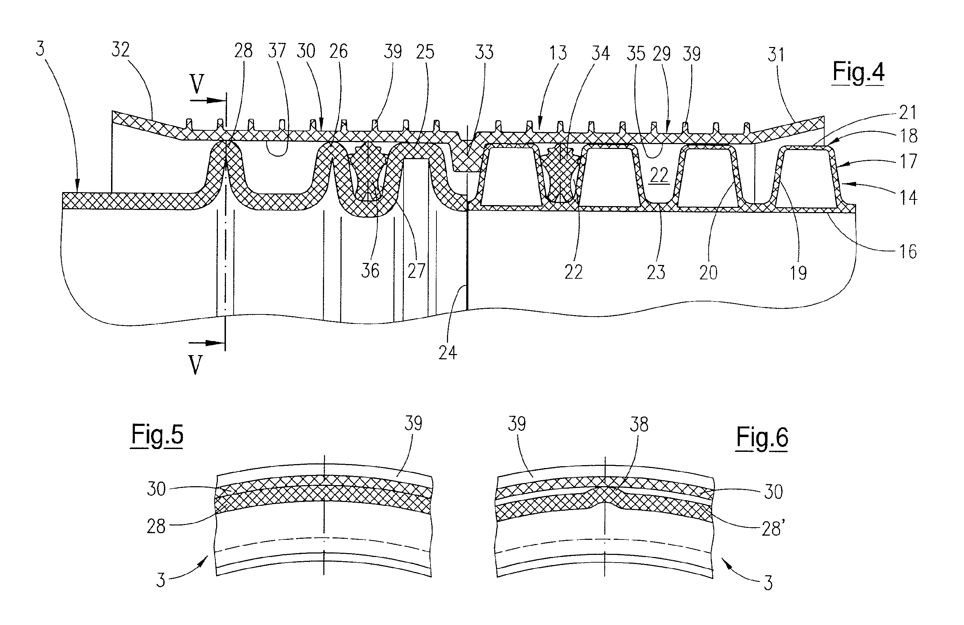

Ein Einsatz eines Schacht-Grundkörpers 1 als Bauteil eines Bausatzes ergibt sich aus den Fig. 3 und 4. An die Rohr-Anschlüsse 3, 4 wird jeweils mittels einer Doppel-Steck-Muffe 13 ein Rohr 14 bzw. 15 als weiterer Bestandteil des Bausatzes angesetzt. Das jeweilige Rohr 14, 15 ist als ein übliches Verbundrohr ausgestaltet, d. h. es besteht aus einem glattwandigen Innenrohr 16 und einem mit diesem bei der Herstellung verschweißten Außenrohr 17, das gewellt ausgebildet ist. Die jeweiligen Wellungen 18 weisen nach außen aufeinander zu geneigte Flanken 19, 20 und einen diese verbindenden äußeren, im Wesentlichen zylindrischen Außen-UmfangsAbschnitt 21 auf. Zwischen zwei benachbarten Wellungen 18 ist ein Wellental 22 in Form eines sich zum Innenrohr 16 hin verjüngenden Trapezes ausgebildet, dessen Fußabschnitt 23 im Bereich des Innenrohres 16 ist.

Der Rohr-Anschluss 3 bzw. 4 weist nach dem Abschneiden des entsprechenden abschließenden Bereiches 11 bzw. 12 eine Öffnung 24 auf, deren Durchmesser etwa dem Durchmesser des Innenrohres 16 entspricht. An die Öffnung 24 schließt sich eine erste Wellung 25 an, die im Querschnitt etwa der Wellung 18 des Rohres 14 bzw. 15 entspricht, wobei der jeweilige Rohr-Anschluss 3, 4 eine deutlich größere Wanddicke aufweist als das Innenrohr 16 und das Außenrohr 17.

An die Wellung 25 schließt sich eine weitere relativ spitzwinklige zweite Wellung 26 an, wobei zwischen den Wellungen 25 und 26 ein Wellental 27 ausgebildet ist, das im Querschnitt den Wellentälern 22 des Rohres 14 bzw. 15 entspricht. Schließlich schließt sich an die zweite Wellung 26 zum Schacht-Element 2 hin noch eine spitzwinklige dritte Wellung 28 an.

Die Steck-Muffe 13 ist symmetrisch aufgebaut, d. h. sie weist zwei zylindrische Abschnitte 29, 30 gleichen Durchmessers auf, die an ihren Enden jeweils mit einer Einführ-Erweiterung 31, 32 versehen sind. Zwischen den beiden zylindrischen Abschnitten 29, 30 ist ein sich radial nach innen erstreckender Anlage-Bund 33 ausgebildet, der zur Anlage gegen eine benachbarte Flanke 19 der ersten Wellung 18 des Rohres 14 kommt. Im ersten Wellental 22 des Rohres 14 ist eine Dichtung 34 angeordnet, die sich gegen den Fußabschnitt 23 des Wellentals 22 und gegen die benachbarten Flanken 19, 20 der beiden einander benachbarten Wellungen 18 und gegen die Innenseite 35 des zylindrischen Abschnitts 29 der Steck-Muffe 13 abstützt. In gleicher Weise ist im Wellental 27 zwischen der ersten Wellung 25 und der zweiten Wellung 26 des Rohr-Anschlusses 3, das einen mit dem Querschnitt des Wellentals 22 identischen Querschnitt aufweist, eine mit der Dichtung 34 identische Dichtung 36 angeordnet, die sich in gleicher Weise an vier Seiten abstützt wie die Dichtung 34.

Wie sich aus den Fig. 4 und 5 ergibt, weist die dritte Wellung 28 einen etwas größeren Durchmesser auf als die erste Wellung 25 und die zweite Wellung 26, wobei die Ausgestaltung so ist, dass die dritte Wellung 28 unter Reibschluss, also klemmend, an der Innenseite 37 des zylindrischen Abschnitts 30 der Steck-Muffe 13 anliegt. Damit wird die Steck-Muffe 13 gegenüber dem Rohr-Anschluss 3 zentriert und während der Montage und danach fest an diesem gehalten. Bei der Alternative gemäß Fig. 6 weist die dritte Wellung 28' nicht durchgehend einen größeren Durchmesser als die erste Wellung 25 und die zweite Wellung 26 auf, sondern ist mit leicht nach außen ausgewölbten noppenartigen Vorsprüngen 38 versehen, die gegen die Innenseite 37 des zylindrischen Abschnitts 30 anliegen. Die zylindrischen Abschnitte 29, 30 der Steck-Muffe 13 sind auf der Außenseite mit Verstärkungs-Rippen 39 versehen.

Wie sich weiterhin aus Fig. 3 ergibt, kann nach Einführung des Schacht-Grundkörpers 1 in eine durch die Rohre 14, 15 gebildete Regenwasser-Abflussleitung 40 an eine oder beide Anschluss-Muffen 6, 7 oder auch weitere Anschluss-Muffen eine Sicker-Leitung 41 angeschlossen werden. Hierzu wird von der entsprechenden Anschluss-Muffe 6 und gegebenenfalls 7 der diese nach der Herstellung abschließende Bereich 42 abgetrennt und in die Anschluss-Muffe 6 eine mit Schlitzen 43 versehene Sicker-Leitung 41 eingesteckt. Einer Abdichtung der Sicker-Leitung 41 in der Anschluss-Muffe 6 bedarf es nicht, da ohnehin das Wasser aus dem umgebenden Bodenbereich hierüber abgeführt wird. Es wird dann durch die Regenwasser-Abflussleitung 40 abgeführt.

Wie sich ebenfalls aus Fig. 3 ergibt, ist das Schacht-Element 2 nach oben durch ein zusätzliches auf Länge geschnittenes Rohr-Element 44 zu einem Revisions- oder Inspektions-Schacht 45 verlängert. Dieses Rohr-Element 44 ist als doppelwandiges Verbundrohr mit inline, also einstückig, angeformter Muffe 46 ausgebildet, die auf den oberen Bereich des Schacht-Elementes 2 aufgesteckt wird, der nach Art eines Spitz-Endes ausgebildet und in einer Weise mit einer ersten Wellung 47, einer zweiten Wellung 48 und einer dritten Wellung 49 versehen ist, für die die Beschreibung der Wellungen 25, 26, 28 ebenfalls gilt. Zwischen der ersten Wellung 47 und der zweiten Wellung 48 wird eine Dichtung 50 angeordnet, die in gleicher Weise ausgebildet ist und dichtend anliegt, wie es zuvor für die Dichtungen 34 und 36 beschrieben wurde. Der Schacht 45 wird durch einen nach oben abnehmbaren Deckel 51 verschlossen, der in einen ringförmigen Rahmen 52 aufgenommen wird. Dieser wiederum wird in bekannter Weise auf einem im Erdreich abgestützten, vom Schacht 45 unabhängigen Fundament-Ring 53, beispielsweise aus Beton, abgestützt und festgelegt. Nach Abnehmen des Deckels 51 kann also der Schacht 45 entweder inspiziert oder - bei entsprechend großem Durchmesser - begangen werden.

Der Abstand a der Sicker-Leitung 41 von der Regenwasser-Abflussleitung 40 beträgt bei der geschilderten sogenannten Huckepack-Ausgestaltung 200 bis 350 mm.

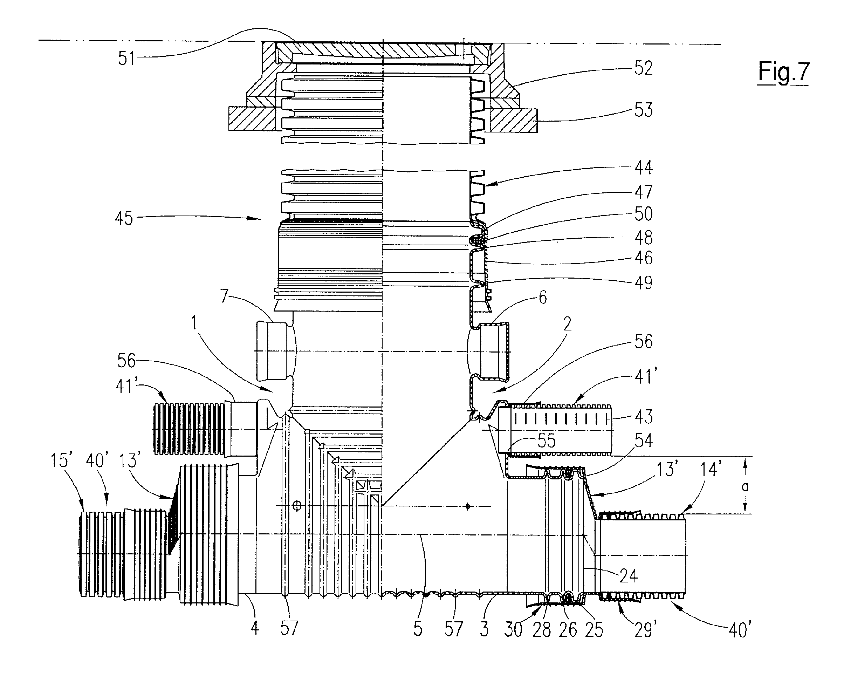

Wenn - entsprechend der Darstellung in Fig. 7 - die Regenwasser-Abfluss-leitung 40 einen geringeren Durchmesser aufweist, als er vom Durchmesser der Rohr-Anschlüsse 3, 4 vorgegeben ist, dann wird eine als Reduzierstück ausgebildete Doppel-Steck-Muffe 13' eingesetzt, die einen zylindrischen Abschnitt 30 aufweist, der dem zylindrischen Abschnitt 30 des Ausführungsbeispiels nach den Fig. 3, 4 entspricht. Sie weist weiterhin einen zylindrischen Abschnitt 29' auf, der dem entsprechend kleineren Rohr 14' bzw. 15' angepasst ist. Die beiden zylindrischen Abschnitte 29', 30 sind durch einen unsymmetrischen Übergangs-Abschnitt 54 miteinander verbunden, der so ausgestaltet ist, dass die Rohre 14', 15' sohlengleich mit dem Schacht-Grundkörper 1 verbunden werden. In diesem Fall wird jeweils eine Sicker-Leitung 41' an die entsprechende Anschluss-Fläche 8 angeschlossen. Hierzu wird an der entsprechenden Stelle in die jeweilige Anschluss-Fläche 8 eine Öffnung 55 geschnitten, in die ein Muffen-Element 56 rastend eingeschoben und damit festgelegt wird. In dieses Muffen-Element 56 wird dann wiederum die Sicker-Leitung 41' eingesetzt. Auf diese Weise kann hiermit wieder ein Abstand a zwischen der Sicker-Leitung 41' und der Regenwasser-Abflussleitung 40' hergestellt werden.

Anstelle einer Doppel-Steck-Muffe 13 bzw. 13' kann eine Muffe auch inline am Rohr 14 bzw. 14' bzw. 15 oder 15' ausgebildet sein, wie es aus der EP 0 563 575 B bekannt und in der Praxis weit verbreitet ist.

## Patentansprüche

1. Bausatz für eine Verbindung eines Inspektions-Schachtes (45) mit einer Abfluss-Leitung (40, 40'),
- mit einem Schacht-Grundkörper (1) aus Kunststoff, der
-- durch Rotationsgießen einstückig und einwandig ausgebildet ist,
-- ein Schacht-Element (2) und
-- zwei, als Spitzende ausgebildete Rohr-Anschlüsse (3, 4) aufweist,
- mit mindestens einem Rohr (14, 14', 15, 15') aus Kunststoff,
- mit einer Muffe (13, 13') aus Kunststoff zur Verbindung des mindestens eines Rohres (14, 14', 15, 15') mit einem Rohr-Anschluss (3, 4) und
- mit mindestens einer zwischen dem Rohr-Anschluss (3, 4) und der Muffe (13, 13') anzuordnenden Dichtung (36).

2. Bausatz nach Anspruch 1, **dadurch gekennzeichnet,**
**dass** der Rohr-Anschluss (3, 4) eine erste und eine zweite jeweils nach außen vorspringende Wellung (25, 26) mit einem zwischen den Wellungen (25, 26) ausgebildeten Wellental (27) zur Aufnahme einer Dichtung (36) aufweist.

3. Bausatz nach Anspruch 2, **dadurch gekennzeichnet,**
**dass** zwischen der zweiten Wellung (26) und dem Schacht-Element (2) am Rohr-Anschluss (3, 4) eine nach außen vorspringende dritte Wellung (28) ausgebildet ist, deren Außendurchmesser zumindest teilweise derart ist, dass zwischen der Innenseite (37) der Muffe (13, 13') und der dritten Wellung (28) ein Reibschluss gebildet wird.

4. Bausatz nach Anspruch 3, **dadurch gekennzeichnet,**
**dass** der Außendurchmesser der dritten Wellung (28) über seinen gesamten Umfang derart ist, dass zwischen der Innenseite (37) der Muffe (13, 13') und der dritten Wellung (28) ein Reibschluss gebildet wird.

5. Bausatz nach Anspruch 3, **dadurch gekennzeichnet,**
**dass** die dritte Wellung (28) an ihrem Außenumfang mit nach außen vorspringenden Vorsprüngen (38) versehen ist, zwischen denen und der Innenseite (37) der Muffe (13, 13') ein Reibschluss gebildet wird.

6. Bausatz nach einem der Ansprüche 1 bis 5, **dadurch gekennzeichnet, dass** die Muffe als Doppel-Steck-Muffe (13) ausgebildet ist,
dass das Rohr (14, 14', 15, 15') als mit Wellungen (18) versehenes Verbundrohr ausgebildet ist und
dass eine weitere Dichtung (34) zur Anordnung zwischen zwei benachbarten Wellungen (18) des Rohres (14, 14', 15, 15') und der Innenseite (35) der Steck-Muffe (13, 13') vorgesehen ist.

7. Bausatz nach Anspruch 6, **dadurch gekennzeichnet,**
**dass** die weitere Dichtung (34) identisch mit der an dem Rohr-Anschluss (3, 4) anzuordnenden Dichtung (36) ist.

8. Bausatz nach einem der Ansprüche 1 bis 5, **dadurch gekennzeichnet, dass** die Muffe einstückig am Rohr ausgebildet ist.

9. Bausatz nach einem der Ansprüche 1 bis 7, **dadurch gekennzeichnet, dass** die Doppel-Steck-Muffe (13') als Reduzierstück mit einem Übergangs-Abschnitt (54) ausgebildet ist.

10. Bausatz nach einem der Ansprüche 1 bis 9, **dadurch gekennzeichnet, dass** am Schacht-Element (2) oberhalb der Rohr-Anschlüsse (3, 4) mindestens eine Anschluss-Muffe (6, 7) für eine Sicker-Leitung (41) vorgesehen ist.

11. Bausatz nach einem der Ansprüche 1 bis 10, **dadurch gekennzeichnet,**
**dass** am Schacht-Element (2) oberhalb der Rohr-Anschlüsse (3, 4) mindestens eine Anschluss-Fläche (8) zur Anbringung eines Muffen-Elementes (56) für eine Sicker-Leitung (41') vorgesehen ist.

12. Schacht-Grundkörper (1) aus Kunststoff für einen Inspektions-Schacht, der
- durch Rotationsgießen einstückig ausgebildet ist,
- ein Schacht-Element (2) und
- zwei als Spitzende ausgebildete Rohr-Anschlüsse (3, 4) aufweist.

13. Schacht-Grundkörper (1) nach Anspruch 12, **dadurch gekennzeichnet,**
**dass** der Rohr-Anschluss (3, 4) eine erste und eine zweite jeweils nach außen vorspringende Wellung (25, 26) mit einem zwischen den Wellungen (25, 26) ausgebildeten Wellental (27) zur Aufnahme einer Dichtung (36) aufweist und
**dass** zwischen der zweiten Wellung (26) und dem Schacht-Element (2) am Rohr-Anschluss (3, 4) eine nach außen vorspringende dritte Wellung (28) ausgebildet ist, deren Außendurchmesser zumindest teilweise größer ist als der Durchmesser der ersten oder zweiten Wellung (25, 26).

14. Schacht-Grundkörper nach Anspruch 12 oder 13, **dadurch gekennzeichnet,**
**dass** am Schacht-Element (2) oberhalb der Rohr-Anschlüsse (3, 4) mindestens eine Anschluss-Muffe (6, 7) für eine Sicker-Leitung (41) vorgesehen ist.

15. Schacht-Grundkörper nach einem der Ansprüche 12 bis 14, **dadurch gekennzeichnet,**
**dass** am Schacht-Element (2) oberhalb der Rohr-Anschlüsse (3, 4) mindestens eine Anschluss-Fläche (8) zur Anbringung eines Muffen-Elementes (56) für eine Sicker-Leitung (41') vorgesehen ist.

16. Schacht-Grundkörper nach einem der Ansprüche 12 bis 15, **dadurch gekennzeichnet,**
**dass** das Schacht-Element (2) als Spitzende ausgebildet ist.
